(19) Europäisches Patentamt / European Patent Office / Office européen des brevets

(11) **EP 3 811 162 B1**

(12) **EUROPÄISCHE PATENTSCHRIFT**

(45) Veröffentlichungstag und Bekanntmachung des Hinweises auf die Patenterteilung:
**02.02.2022   Patentblatt 2022/05**

(21) Anmeldenummer: **19736303.9**

(22) Anmeldetag: **21.06.2019**

(51) Internationale Patentklassifikation (IPC):
**G05B 13/02** (2006.01)

(52) Gemeinsame Patentklassifikation (CPC):
**G05B 13/024**

(86) Internationale Anmeldenummer:
**PCT/EP2019/025193**

(87) Internationale Veröffentlichungsnummer:
**WO 2019/242892 (26.12.2019 Gazette 2019/52)**

(54) **VERFAHREN ZUR KALIBRIERUNG EINES TECHNISCHEN SYSTEMS**

METHOD FOR CALIBRATING A TECHNICAL SYSTEM

PROCÉDÉ D'ÉTALONNAGE D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2018   AT 504992018**

(43) Veröffentlichungstag der Anmeldung:
**28.04.2021   Patentblatt 2021/17**

(73) Patentinhaber: **AVL List GmbH**
**8020 Graz (AT)**

(72) Erfinder:
• **RAINER, Andreas**
**9422 Maria Rojach (AT)**
• **DIDCOCK, Nico**
**8020 Graz (AT)**

(74) Vertreter: **Patentanwälte Pinter & Weiss OG**
**Prinz-Eugen-Straße 70**
**1040 Wien (AT)**

(56) Entgegenhaltungen:
WO-A1-2017/050659    WO-A1-2017/198638
WO-A2-2013/087307    DE-B3-102004 026 583

**Beschreibung**

Die gegenständliche Erfindung betrifft ein Verfahren zur Kalibrierung eines technischen Systems, das durch eine Anzahl von Steuervariablen des technischen Systems gesteuert wird und sich in Abhängigkeit der Steuervariablen des technischen Systems ein Betriebspunkt in Form einer Anzahl von Zustandsvariablen des technischen Systems einstellt, wobei bei der Kalibrierung in einem i-ten Betriebspunkt durch eine Optimierung unter Einhaltung vorgegebener Nebenbedingungen die Steuervariablen des technischen Systems gesucht werden, die hinsichtlich zumindest einer Ausgangsgröße des technischen Systems optimal sind, wobei mit einer Nebenbedingung der Optimierung geprüft wird, ob ein bei der Optimierung berechneter Testpunkt mit Steuervariablen des technischen Systems innerhalb einer Datenhülle um eine Anzahl vorhandener Datenpunkte des technischen Systems liegt.

Bei der Kalibrierung eines Verbrennungsmotors geht es im Allgemeinen darum, bestimmte vorgegebene Steuervariablen des Verbrennungsmotors in Abhängigkeit von Zustandsvariablen des Verbrennungsmotors so festzulegen, sodass bestimmte Vorgaben, wie z.B. Emissionsgrenzen oder Verbrauchsgrenzen (allgemein Ausgangsgrößen), eingehalten werden und dabei unzulässige Betriebszustände des Verbrennungsmotors vermieden werden. Steuervariablen sind dabei Variablen, über die der Verbrennungsmotor geregelt oder gesteuert wird, also beispielswiese ein Zündzeitpunkt, ein Einspritzzeitpunkt (z.B. Voreinspritzung, Nacheinspritzung), die Menge an rückgeführtem Abgas eines EGR (Exhaust Gas Recirculation), die Stellung einer Drosselklappe, etc. Zustandsvariablen sind Größen des Verbrennungsmotors, die sich in Abhängigkeit der Steuervariablen und in Abhängigkeit von aktuellen äußeren Einflüssen (wie z.B. eine Last, Umgebungsbedingungen (z.B. Umgebungstemperatur, Atmosphärendruck), usw.) einstellen. Typische Zustandsvariablen eines Verbrennungsmotors sind die Drehzahl und das Drehmoment. Die Zustandsvariablen bilden einen Betriebszustand des Verbrennungsmotors ab. Die Zustandsvariablen können gemessen werden, können aber auch, z.B. anhand von Modellen, aus anderen Messgrößen des Verbrennungsmotors berechnet werden. Die Steuervariablen und die Zustandsvariablen bilden gemeinsam die Eingangsgrößen der Kalibrierung, in Form eines Eingangsgrößenvektors aller Steuervariablen und Zustandsvariablen. Unzulässige Betriebszustände werden beispielsweise anhand physikalisch messbarer Ausgangsgrößen, wie z.B. ein Verbrauch, eine Emission (NOx, COx, Ruß, etc.), ein Zylinderdruck, eine Motortemperatur, usw. festgestellt. Dazu werden in der Regel entsprechende Grenzwerte der messbaren Ausgangsgrößen vorgegeben. Die Ausgangsgrößen stellen sich in Abhängigkeit vom aktuellen Betriebszustand (Zustandsvariablen) und den aktuellen Steuervariablen als Reaktion des Verbrennungsmotors ein. Bestimmte Zustandsvariablen können auch begrenzt werden, beispielsweise ein maximales Drehmoment oder eine maximale Drehzahl, und damit einen unzulässigen Betriebszustand definieren. Ein unzulässiger Betriebszustand des Verbrennungsmotors kann sich aber auch an unerwünschten Effekten wie Klopfen, Fehlzündungen, usw. manifestieren. Solche unzulässige Betriebszustände treten dabei bei bestimmten Kombinationen von Eingangsgrößen auf, möglicherweise auch in Abhängigkeit von äußeren Einflüssen. Bei der Kalibrierung eines Verbrennungsmotors gilt es nun, die Steuervariablen für gegebene Zustandsvariablen, und eventuell auch für bestimmte äußere Einflüsse, so festzulegen, dass möglichst keine unzulässigen Betriebszustände auftreten und gleichzeitig gewisse Ausgangsgrößen (Ziele der Kalibrierung) optimiert (in der Regel minimiert) werden, typischerweise Emissionswerte (NOx, COx, HC (Kohlenwasserstoff) Anteil im Abgas, Ruß, Feinstaub, etc.) und Verbrauch. Als Versuchsraum wird bei der Kalibrierung der mehrdimensionale (gemäß der Anzahl der Steuervariablen) Raum bezeichnet, der durch die Steuervariablen aufgespannt wird. Alle zulässigen Steuervariablen des Versuchsraums bilden den fahrbaren Bereich, innerhalb der die Steuervariablen für gegebene Zustandsvariablen liegen müssen, um keine unzulässigen Betriebszustände hervorzurufen. Der fahrbare Bereich, der von den aktuellen Zustandsvariablen abhängig ist, ist damit ein Unterraum des Versuchsraumes. Der äußere Rand des fahrbaren Bereichs wird häufig auch als Fahrbarkeitsgrenze bezeichnet.

Die Steuervariablen sind dabei häufig in Steuergeräten hinterlegt, beispielsweise als Kennfelder in Abhängigkeit von den Zustandsvariablen. Für einen Verbrennungsmotor sind die Steuervariablen z.B. in einem Motorsteuergerät, für ein Getriebe z.B. in einem Getriebesteuergerät, für einen Hybridantriebsstrang z.B. in einem Hybridsteuergerät, usw. hinterlegt.

Heutige Verbrennungsmotoren haben eine Vielzahl von Steuervariablen, die in Abhängigkeit einer Vielzahl von Zustandsvariablen eingestellt werden. Aufgrund der sich damit ergebenden Vielzahl der Eingangsgrößen der Kalibrierung, der üblicherweise nichtlinearen Einflüsse der Steuervariablen auf die Betriebszustände des Verbrennungsmotors und auch aufgrund der, auch mehrfachen, Abhängigkeiten der Eingangsgrößen (weil die Fahrbarkeitsgrenze eingehalten werden muss) untereinander ist die Kalibrierung eine sehr komplexe Aufgabenstellung, die manuell kaum zu bewerkstelligen ist. Die Kalibrierung wird daher häufig als Optimierungsproblem gelöst, wobei die oder gewisse Eingangsgrößen hinsichtlich einer oder mehrere Ausgangsgrößen optimiert (minimiert oder maximiert) werden. Bei der Optimierung werden für vorgegebene Zustandsvariablen, und gegebenenfalls auch für gegebene äußere Einflüsse, die Steuervariablen variiert, um die Ausgangsgrößen zu optimieren. Als Ausgangsgröße werden bei der Kalibrierung eines Verbrennungsmotors häufig Emissionswerte oder der Verbrauch herangezogen. Dabei werden bei der Optimierung auch Nebenbedingungen vorgegeben, insbesondere auch die Einhaltung der Fahrbarkeitsgrenze. D.h., dass bei der Optimierung die Steuervariablen und die Zustandsvariablen nur innerhalb der Fahrbarkeitsgrenze liegen dürfen. Auf diese Weise werden in der Regel Kennfelder für die Steuervariablen in Abhängigkeit von den Zustandsvariablen, und gegebenenfalls auch in Abhängigkeit von äußere Einflüssen, erstellt, die im Motorsteuergerät des Verbrennungsmotors zum Steuern des Verbrennungsmotors hinterlegt werden. Im Fahrbetrieb werden die aktuellen Zustandsvariablen erfasst und aus den hinterlegten Kennfeldern die vorzunehmenden Einstellungen für die Steuervariablen entnommen und am Verbrennungsmotor eingestellt.

Ein Problem dabei ist, dass man zur Kalibrierung nur eine begrenzte, diskrete Anzahl von Datenpunkten der Eingangsgrößen (ein Datenpunkt ist hierbei ein konkreter Eingangsgrößenvektor) zur Verfügung hat. Diese Datenpunkte werden dabei entweder aus Modellen berechnet oder auf einem Prüfstand am real vorhandenen und betriebenen Verbrennungsmotor gemessen. Eine Fahrbarkeitsgrenze liegt damit aber noch nicht vor. Ob nun eine aus der Optimierung für bestimmte Zustandsvariablen neu bestimmte Steuervariable, in den meisten Fällen ein Steuervariablenvektor mit mehreren Steuervariablen, innerhalb der Fahrbarkeitsgrenze liegt, oder außerhalb, kann daher anhand der vorhandenen diskreten Datenpunkte nicht ermittelt werden. Daher wurden schon sogenannten Datenhüllen verwendet, die aus einer begrenzten Anzahl von Datenpunkten eine Einhüllende der Datenpunkte, die sogenannte Datenhülle, berechnet. Die Fahrbarkeitsgrenze wird damit von der Datenhülle gebildet.

Um dieses Problem zu lösen sind schon Hüllenalgorithmen bekannt geworden, die die Datenhüllen ausschließlich aus den vorhandenen zulässigen Datenpunkten berechnen. Ein Beispiel hierfür ist die konvexe Datenhülle, die als der kleinste, konvexe Raum definiert ist, welcher die vorhandenen Datenpunkte enthält. Ein bekannter Algorithmus, der eine konvexe Datenhülle annähert ist der sogenannte QuickHull Algorithmus. Die Verwendung der konvexen Datenhülle ist aber aus zweierlei Gründen problematisch. Erstens, ist die Berechnung der konvexen Hülle nur in niedrigdimensionalen Versuchsräumen effizient. Der Berechnungsaufwand steigt jedoch exponentiell mit der Dimension des Versuchsraumes, aber auch mit der Anzahl der Datenpunkte für die Berechnung der Datenhülle, an, sodass eine Berechnung ab ca. 10-dimensionalen Versuchsräumen mit vertretbarem Rechenaufwand bereits praktisch unmöglich ist. Zweitens sind die relevanten Bereiche des Versuchsraums in der Praxis oft nicht konvex, was zu unrealistischen Datenhüllen führt. Dieses Problem wird oftmals durch etwas komplexere Triangulationen gelöst. Unter einer Triangulation versteht man die Aufteilung der konvexen Datenhülle in einfache Formen, also im zweidimensionalen Fall etwa die Triangulation der Datenpunkte in Dreiecksnetze. Ein Beispiel für nicht-konvexe Triangulationen sind die sogenannten Alpha-Shapes, wie beispielsweise in H. Edelsbrunner, et al., "Three-Dimensional Alpha Shapes", ACM Transactions on Graphics, Vol.13, No. 1, Jan. 1994, Seiten 43-72 beschrieben. Die Berechnung dieser Triangulationen ist aber für höhere Dimensionen, und auch für eine hohe Anzahl von Datenpunkten, ebenfalls sehr komplex und aufwendig.

Speziell bei der Kalibrierung eines Verbrennungsmotors sind in der Regel aber 10 bis 20 und mehr Steuervariablen (Dimension des Versuchsraumes >10) zu verarbeiten. Gleichfalls sind $10^5$ bis $10^6$ verfügbare Datenpunkte für die Kalibrierung keine Seltenheit. Beides macht die Berechnung einer konvexen Datenhülle bei der Kalibrierung praktisch unmöglich, zumindest mit vertretbarem Aufwand und in vertretbarer Zeit.

Aus der WO 2017/198638 A1 sind Hüllenalgorithmen bekannt, mit denen auch bei großen Dimensionen des Versuchsraumes, insbesondere auch >10, mit vertretbarem Aufwand Datenhüllen berechnet werden können. Diese Algorithmen sind aber oftmals in verwendeten Umgebungen zur Kalibrierung nicht implementiert und daher nicht verwendbar. Abgesehen davon ist es oftmals so, dass Kalibrieringenieure auf vertraute Algorithmen, insbesondere die konvexe Datenhülle, vertrauen, anstatt Neues zu versuchen.

Daher wird trotz der vorhandenen Alternativen oftmals der Versuchsraum manuell verkleinert, um konvexe Datenhüllen zu berechnen beispielsweise indem Datenhüllen über weniger Dimensionen, aber dafür mehrere solcher Datenhüllen, berechnet werden. Die manuelle Auswahl der Steuervariablen für den Versuchsraum bedarf aber einiges an Erfahrung, weil die Auswahl der Steuervariablen Einfluss auf die Genauigkeit und Zuverlässigkeit der Kalibrierung hat.

Die obigen Probleme treten aber nicht nur bei der Kalibrierung eines Verbrennungsmotors als technisches System auf, sondern können natürlich auf ein beliebiges technisches System übertragen werden, wobei das technische System aufgrund einer Vorgabe von Steuervariablen gesteuert wird und in Abhängigkeit von der Vorgabe der Steuervariablen einen bestimmten durch Zustandsvariablen definierten Zustand einnimmt. Ein anderes Beispiel ist eine Getriebeanwendung mit einer Getriebesteuereinheit (TCU) oder eine Hybridanwendung mit Hybridsteuereinheit und/oder Batteriemanagementsystem. Weitere Beispiel sind eine Klimatisierung eines Fahrzeugs oder eine elektronisch steuerbare Federung oder Aufhängung. Im Prinzip kann jegliches mechatronisches System als technisches System, das von einer Steuereinheit gesteuert wird, kalibriert werden. Bei der Kalibrierung des technischen Systems ist es das allgemeine Ziel, die Steuervariablen in Abhängigkeit von den Zustandsvariablen so vorzugeben, dass möglichst keine unzulässigen Betriebszustände auftreten und gleichzeitig vorgegebene Ausgangsgrößen des technischen Systems hinsichtlich eines Optimierungsziels optimiert werden. Bei der Kalibrierung werden in der Regel Datenfelder oder Datentabellen erzeugt, anhand derer das technische System gesteuert werden kann. Diese Datenfelder oder Datentabellen werden dabei in der Regel in einem Steuergerät des technischen Systems gespeichert, um im Betrieb die für den jeweiligen Betriebszustand optimalen Steuervariablen auslesen zu können. Typische Beispiele von Komponenten eines Fahrzeugs, die mit zugehörigen Steuergeräten gesteuert werden, sind neben dem Verbrennungsmotor ein Getriebe, eine Antriebsbatterie, Bremsen, ein Antriebsstrang, eine Radaufhängung, etc.

Die erfindungsgemäße Kalibrierung kann aber auch zur Optimierung des Verhaltens eines Fahrzeugs oder einer Komponente eines Fahrzeugs verwendet werden. Oftmals werden durch Kalibrierung die Fahreigenschaften eines Fahrzeugs (z.B. Geräusch, Fahrwerk, Dämpfung, Schaltverhalten, Lenkung, Klimatisierung, etc.) hinsichtlich gewünschter Eigenschaften optimiert. Als Beispiele seien eine Dämpfungsoptimierung, Getriebeoptimierung, Kupplungsoptimierung oder die Abstimmung einer Fahrzeuglenkung genannt. Die Steuervariablen sind damit bestimmte Einstellungen am technischen System, mit denen das technische System betrieben wird. Beispielsweise kann die Steifigkeit eines Fahrwerks optimiert werden, indem die Federparameter (Steuervariablen) in Fahrwerklagern variiert werden, um bestimmte Ausgangsgrößen, wie z.B. die Fahrdynamik oder den Fahrkomfort, zu beeinflussen bzw. zu optimieren. Ein anderes Beispiel ist eine hydrodynamische Kupplung, wobei der Kupplungsfüllverlauf optimiert wird, oder die Abstimmung des Verhaltens oder der Eigenschaften einer Fahrzeuglenkung.

Die Kalibrierung ist aber auch nicht auf Komponenten eines Fahrzeugs beschränkt, sondern kann ganz allgemein für beliebige Maschinenkomponenten als technisches System angewendet werden.

Als technisches System für die Kalibrierung kommt daher insbesondere jede Komponente einer Maschine, z.B. eines Fahrzeugs, in Frage, das im Betrieb durch Steuervariablen beeinflusst werden kann (z.B. durch Steuerung oder durch eine bestimmte Einstellung) und das hinsichtlich eines bestimmten Verhaltens in Abhängigkeit von einem Betriebszustand optimiert werden soll.

Es ist daher ein Ziel der gegenständlichen Erfindung ein Verfahren zur Kalibrierung eines technischen Systems anzugeben, das es ermöglicht auf Basis gültiger Datenpunkte auf einfache und rasche Weise die Einhaltung einer Datenhülle zu berücksichtigen.

Diese Aufgabe wird mit den Merkmalen des unabhängigen Anspruchs 1 gelöst. Durch die Aufteilung des Kalibrierraumes auf mehrere kleinere Unter-Kalibrierräume, für die dann Datenhüllen berechnet werden, kann der Rechenaufwand für die Ermittlung der Datenhüllen deutlich gesenkt werden. Anstelle eine Datenhülle hoher Dimension werden somit Datenhüllen kleinere Dimension verwendet, die schneller ermittelt werden können. Das erfindungsgemäße Vorgehen bei der Aufteilung stellt dabei sicher, dass die Kalibrationsvariablen, die den größten beschränkenden Einfluss haben in einem ersten Unter-Kalibrierraum enthalten sind. Das Ziel ist, den kleinsten (z.B. konvexen) Raum, der die Daten einhüllt als Datenhülle zu definieren. Die Kalibrationsvariablen, die den größten beschränkenden Einfluss haben, führen auch zur kleinsten Datenhülle, weshalb diese in vorteilhafter Weise im ersten Unter-Kalibrationsraum aufgenommen werden. Das ermöglicht es auch, die Kalibrierung bei Kalibrierräumen hoher Dimension (>10) und mit herkömmlichen Hüllenalgorithmen, insbesondere einen konvexen Hüllenalgorithmus wie den QuickHull Algorithmus, durchzuführen.

Der Aufwand für die Ermittlung der weiteren Unter-Kalibrationsräume, kann reduziert werden, wenn einfach zumindest ein verbleibender e-dimensionaler Zusammenhang mit nicht für den ersten Unter-Kalibrationsraum ausgewählten Kalibrationsvariablen als weiterer Unter-Kalibrationsraum verwendet wird und die e-dimensionale Datenhülle dieses e-dimensionalen Zusammenhanges bei der Kalibrierung als Nebenbedingung geprüft wird. Der Aufwand reduziert sich noch ganz erheblich, wenn alle verbleibenden e-dimensionale Zusammenhänge mit nicht für den ersten Unter-Kalibrationsraum ausgewählten Kalibrationsvariablen als weitere Unter-Kalibrationsräume verwendet werden.

Die Kalibrierung kann einfach auf äußere Einflüsse auf das technische System erweitert werden, wenn bei der Kalibrierung zumindest ein äußerer Einfluss auf das technische System berücksichtigt wird und die Kalibrationsvariablen den zumindest einen äußeren Einfluss umfassen.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt

Fig.1 die kombinatorischen Variationen der Kalibrationsvariablen des Kalibrierraumes in Form zweidimensionaler Diagramme der Kalibrationsvariablen,
Fig.2 und 3 jeweils einen Auszug davon mit zweidimensionalen Datenhüllen und
Fig.4 ein Beispiel einer Kalibrierung eines technischen Systems.

Einleitend sei erwähnt, dass es hinlänglich bekannte Methoden gibt, um einen Versuchsplan (auch als Design of Experiments (DoE) bekannt) in Form einer Anzahl von Steuervariablen zu erstellen, mit dem das technische System ideal angeregt werden kann, um die statischen und dynamischen Eigenschaften des technischen Systems optimal zu erfassen. Wird das technische System mit den Steuervariablen angeregt und dabei die Zustandsvariablen gemessen erhält man Datenpunkte $x_n$, also in diesem Fall konkrete Messungen am technischen System. Ebenso gibt es hinlänglich bekannte Methoden, um ein Modell eines technischen Systems, bzw. einer Ausgangsgröße y des technischen Systems, anhand von verfügbaren Datenpunkten $x_n$ zu identifizieren.

Es können für technische Systeme auch bekannte, vorhandene Modelle genutzt werden. Mit dem Modell muss die Ausgangsgröße y nicht mehr gemessen werden, sondern kann auch für andere Datenpunkte aus dem Modell berechnet werden. Ebenso können mit einem Modell die Zustandsvariablen in Abhängigkeit von den Steuervariablen modelliert werden, womit es auch möglich ist, aus einem solchen Modell weitere Datenpunkte $\mathbf{x}_n$ zu ermitteln. Oftmals werden der Versuchsplan und ein Modell auch gleichzeitig ermittelt. Beispiele hierfür finden sich in WO 2012/169972 A1 oder WO 2014/187828 A1. Für die gegenständliche Erfindung kommt es aber nicht auf die konkrete Art an wie man zu den Datenpunkten $\mathbf{x}_n$ kommt, sondern es wird davon ausgegangen, dass eine Vielzahl gültiger Datenpunkte $\mathbf{x}_n$ (also innerhalb der Fahrbarkeitsgrenze) vorliegen. Ebenso ist es für die Erfindung unerheblich, wie die Ausgangsgröße y ermittelt wird, beispielsweise messtechnisch am technischen System, oder aus einem geeigneten Modell.

Die Erfindung wird nun ohne Einschränkung der Allgemeinheit am Beispiel eines Verbrennungsmotors als technisches System beschrieben. Es wird davon ausgegangen, dass eine Vielzahl n = 1,...,N von gültigen (also innerhalb der Fahrbarkeitsgrenze liegenden) Datenpunkten $\mathbf{x}_n$ des technischen Systems vorhanden ist. Die Datenpunkte $\mathbf{x}_n$ können durch Messung auf einem Prüfstand für das technische System, beispielsweise auf einem Motorprüfstand für einen Verbrennungsmotor, oder anhand eines vorhandenen oder identifizierten Modells des technischen Systems ermittelt werden. In beiden Fällen ist es für die Kalibrierung üblicherweise das Ziel, mit den Datenpunkten $\mathbf{x}_n$ den Versuchsraum, also den Raum der Steuervariablen $\mathbf{u}_n$, in Abhängigkeit von den Zustandsvariablen $\mathbf{v}_n$, innerhalb der Fahrbarkeitsgrenze möglichst gut und gleichmäßig abzudecken.

Ein Datenpunkt $\mathbf{x}_n$ ist dabei jeweils ein Vektor mit allen an der Kalibrierung beteiligten Kalibrationsvariablen kv in Form konkreter Werte aller beteiligten k Steuervariablen u = [$u_1$, ..., $u_k$] und konkreter Werte aller beteiligten m Zustandsvariablen v = [$v_1$, ..., $v_m$], also

$$\mathbf{x}_n = \left[ \mathbf{u}_n^T, \mathbf{v}_n^T \right]^T$$

. In den Kalibrationsvariablen kv könnten auch äußere Einflüsse w berücksichtigt werden, die in der Regel nicht verändert werden können, sondern vorliegen und sich üblicherweise nur sehr langsam ändern. Auf einem Prüfstand für das technische System könnten aber auch solche äußeren Einflüsse w eingestellt werden. Ein Datenpunkt $\mathbf{x}_n$ könnte damit auch solche äußere Einflüsse w beinhalten, was aber am erfindungsgemäßen Vorgehen nichts ändert. Die Steuervariablen $\mathbf{u}_n$ und Zustandsvariablen $\mathbf{v}_n$ sind dazu gegebenenfalls ebenfalls in entsprechenden Vektoren zusammengefasst.

Die Kalibrierung ist dann ein Optimierungsproblem, das beispielsweise allgemein in der Form

$$\mathbf{u(v)} = \arg\min_{\mathbf{u}} \mathbf{y(x)} \quad \forall \mathbf{v} \in Z$$

$$\mathbf{h(x)} \le 0$$

$$\mathrm{g(x)} \le 0$$

angeschrieben werden kann. Dabei bezeichnet Z den Zustandsraum gegeben durch die Zustandsvariablen $\mathbf{v}$. $\mathbf{h}$ und g sind vorgegebene Nebenbedingungen der Optimierung. Optimiert werden Ausgangsgrößen y des technischen Systems, die in einem Ausgangsgrößenvektor $\mathbf{y}$ zusammengefasst sind, beispielsweise Emissionswerte, der Verbrauch, usw. eines Verbrennungsmotors. Es wird nach zumindest einer Ausgangsgröße y optimiert, indem der Steuervariablenvektor $\mathbf{u}$ in Abhängigkeit von einem gegebenen Zustandsvariablenvektor $\mathbf{v}$ variiert wird. Mit der Nebenbedingung $\mathbf{h}$ kann z.B. die Einhaltung zulässiger Betriebszustände des technischen Systems, wie beispielsweise Emissions- oder Verbrauchsgrenzen, ein maximaler Zylinderdruck, eine maximale Motortemperatur, Vermeidung von Klopfen, usw., vorgegeben werden und mit der Nebenbedingung g kann eine Datenhülle D, also z.B. das Einhalten einer Fahrbarkeitsgrenze, vorgegeben werden. Die Ausgangsgröße y kann am technischen System 1 gemessen werden oder kann aus einem Modell des technischen Systems 1 ermittelt werden.

Die Kalibrierung wird in der Regel jeweils in einem vorgegebenen, festgehaltenen i-ten, i = 1,...,I Betriebspunkt des technischen Systems, der durch einen vorgegebenen i-ten Zustandsvariablenvektor $\mathbf{v}_i$, der alle Zustandsvariablen v enthält, gegeben ist, durchgeführt. Die Kalibrierung kann dabei gegebenenfalls auch bei bestimmten äußeren Einflüssen w durchgeführt werden. Die Kalibrierung an festen Betriebspunkten erleichtert die Kalibrierung, da damit die Kalibrationsvariablen kv auf die Steuervariablen u, und gegebenenfalls auf bestimmte äußere Einflüsse w, reduzieren werden können, also z.B. $\mathbf{x}_i = [\mathbf{u}]^T$. In gleicher Weise vereinfachen sich damit aber auch die Nebenbedingungen zu $\mathbf{h}_i(\mathbf{u}_i)$ und $\mathbf{g}_i(\mathbf{u}_i)$. In diesem Fall spricht man auch von lokaler Kalibrierung, da nur die für den jeweiligen i-ten Betriebspunkt geltenden Steuervariablen $\mathbf{u}_i$ berücksichtigt werden, nicht jedoch die Zustandsvariablen $\mathbf{v}_i$. Damit wird auch nur eine lokale Datenhülle berücksichtigt. Die lokale Datenhülle umfasst damit nur gültige Datenpunkte $\mathbf{x}_{ni}$ für den festgehaltenen i-ten Betriebspunkt. Das obige Optimierungsproblem für den i-ten Betriebspunkt vereinfacht sich dann zu

$$\mathbf{u}_i = \arg\min_{\mathbf{u}} \mathbf{y(u)}$$

$$\mathbf{h}_i(\mathbf{u}_i) \le 0$$

$$g_i(\mathbf{u}_i) \leq 0$$

Dieses Optimierungsproblem wird für zumindest einen, vorzugsweise für jeden, der i Betriebspunkte gelöst. Die bekannten Datenpunkte $\mathbf{x}_n$ werden bei der Kalibrierung nur für die Prüfung der Datenhülle in Form der Nebenbedingung $g_i(\mathbf{u}_i)$ benötigt. Der Nachteil der lokalen Kalibrierung ist, dass dadurch an sich bekannte Information benachbarter Betriebspunkte systematisch ignoriert wird.

Daher werden in der Kalibrierung die Zustandsvariablen $\mathbf{v}_i$ oftmals als zusätzlicher Eingang berücksichtigt, womit die Kalibrationsvariablen kv sowohl die Steuervariablen u als auch die Zustandsvariablen v umfassen, und gegebenenfalls auch bestimmte äußere Einflüsse, also z.B. $\mathbf{x}_i = [\mathbf{u}, \mathbf{v}]^T$. Die Kalibrierung kann dabei gegebenenfalls auch bei bestimmten äußeren Einflüssen durchgeführt werden. Bei der Kalibrierung wird wiederum der Steuervariablenvektor u in Abhängigkeit von einem gegebenen Zustandsvariablenvektor $\mathbf{v}_i$ variiert. In gleicher Weise ergeben sich die Nebenbedingungen im i-ten Betriebspunkt $\mathbf{v}_i$ zu $h(\mathbf{u}_i,\mathbf{v}_i)$ und $g(\mathbf{u}_i,\mathbf{v}_i)$. In diesem Fall spricht man auch von globaler Kalibrierung und es wird mit der Nebenbedingung $g(\mathbf{u}_i,\mathbf{v}_i)$ eine globale Datenhülle über alle Datenpunkte $\mathbf{x}_n$ berücksichtigt. Das Optimierungsproblem folgt dann für jeden der i Betriebspunkte $\mathbf{v}_i$ in der Form

$$\mathbf{u}_i(\mathbf{v}_i) = \arg \min_{\mathbf{u}} \mathbf{y}(\mathbf{u}, \mathbf{v}_i)$$

$$\mathbf{h}(\mathbf{u}_i, \mathbf{v}_i) \leq 0$$

$$g(\mathbf{u}_i, \mathbf{v}_i) \leq 0$$

Dieses Optimierungsproblem wird für zumindest einen, vorzugsweise für alle, i Betriebspunkte gelöst. Die Kalibrierung erfolgt damit ebenfalls bei einem bestimmten i-ten Betriebspunkt $\mathbf{v}_i$, nur wird nun über die Randbedingungen **h** bzw. g auch Information aus weiteren, insbesondere benachbarten, Betriebspunkten berücksichtigt. Dadurch werden die durch die Optimierung identifizierten Modelle der Ausgangsgrößen **y** genauer und die durch die globale Datenhülle vorgegebene Randbedingung g weniger restriktiv.

Die Ausgangsgrößen **y,** für jeden der i Betriebspunkte, des technischen Systems sind jeweils ein Optimierungsziel bzw. ein Ziel der Kalibrierung, beispielsweise die Minimierung der Emissionen, wie z.B. einer NOx, COx, HC oder Ruß Emission eines Verbrennungsmotors, die Minimierung des Verbrauchs eines Verbrennungsmotors, usw. Der Zusammenhang zwischen Ausgangsgrößen **y** und der Steuervariablen **u** und gegebenenfalls der Zustandsvariablen **v** wird durch die Kalibrierung identifiziert. Es gibt hinlänglich bekannte Verfahren zur Lösung der oben erwähnten Optimierungsprobleme, beispielsweise werden in der WO 2013/087307 A2 solche Verfahren beschrieben. Bei der Optimierung werden also die Steuervariablen u gesucht, die hinsichtlich zumindest einer Ausgangsgröße y des technischen Systems optimal sind, wobei die Optimierung in der Regel auf eine Minimierung oder Maximierung der Ausgangsgröße abzielt. Allgemein wird die Optimierung iterativ durchgeführt, bis ein definiertes Abbruchkriterium erreicht ist. Ein mögliches Abbruchkriterium ist z.B. eine bestimmte Anzahl von Iterationen oder das Erreichen bzw. Unterschreiten einer Zielvorgabe der Ausgangsgrößen **y**. Die Steuervariablen u zum Zeitpunkt des Eintretens des Abbruchkriteriums werden als optimale Steuervariablen u angesehen. Das technische System wird dann mit diesen optimalen Steuervariablen betrieben. Dabei wird in jedem Iterationsschritt auch die Einhaltung der Nebenbedingungen überprüft. Für die gegenständliche Erfindung kommt es aber nicht darauf an wie man das Optimierungsproblem konkret löst.

Bei der Kalibrierung wird durch die Optimierung in jedem Iterationsschritt j der Optimierung für jeden der i Betriebspunkte $\mathbf{v}_i$ ein neuer Steuervariablenvektor $\mathbf{u}_{ij}$ ermittelt, unter Berücksichtigung der Datenhülle in der Nebenbedingung g, die aus den N vorhandenen Datenpunkten $\mathbf{x}_n$ ermittelt wird. Wird das vorgegebene Abbruchkriterium erreicht und erfüllt der neue Steuervariablenvektor $\mathbf{u}_{ij}$ alle Nebenbedingungen, dann wird der Steuervariablenvektor $\mathbf{u}_{ij}$ im letzten Iterationsschritt zur optimierten Steuervariablen $\mathbf{u}_i$ im i-ten Betriebspunkt. Um bei der Kalibrierung die Einhaltung der Nebenbedingung g zu überprüfen, wird in jedem Iterationsschritt j geprüft, ob dieser neue Steuervariablenvektor $\mathbf{u}_{ij}$ innerhalb der Datenhülle, also z.B. innerhalb der Fahrbarkeitsgrenze, liegt, oder außerhalb. Diese Überprüfung muss auch für hohe Dimensionen (>10) des durch die Steuervariablen **u** und gegebenenfalls Zustandsvariablen **v** definierten Kalibrationsraums K ausreichend schnell möglich sein. Je nach Art der Kalibrierung (lokal oder global) umfasst der Kalibrationsraum K demnach den Versuchsraum (der Steuervariablen) oder den Versuchsraum (der Steuervariablen) und den Zustandsraum (der Zustandsvariablen), gegebenenfalls auch unter Berücksichtigung äußerer Einflüsse. Um die Nebenbedingung g bei der Optimierung prüfen zu können, ist aber zuerst aus den bekannten N Datenpunkten $\mathbf{x}_n$ die Datenhülle D zu ermitteln. Die Dimension d des Kalibrationsraumes K kann aber sehr groß werden, sodass die Berechnung der Datenhülle D mitunter sehr rechenaufwendig ist oder gar nicht berechnet werden kann (zumindest nicht in vertretbarer Zeit).

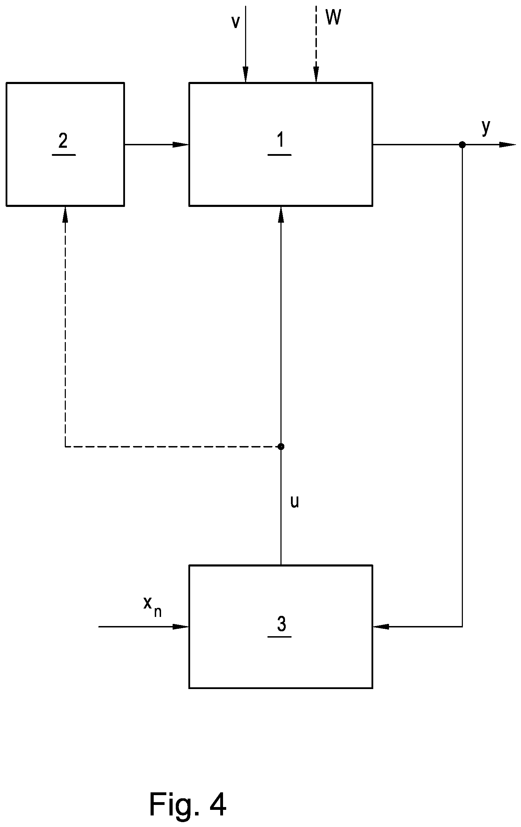

Die Kalibrierung könnte dabei wie in Fig.4 dargestellt ablaufen. Die Kalibrierung erfolgt in einer Kalibriereinheit 3 (die für die Kalibrierung verwendete Hardware und/oder Software) auf Basis von bekannten Datenpunkten $\mathbf{x}_n$, indem die Steuervariablen u des technischen Systems 1 bei gegebenen Zustandsvariablen v, und gegebenenfalls gegebenen äußeren Einflüssen w, variiert werden, um die zumindest eine Ausgangsgröße y zu optimieren. Hierbei spielt es keine Rolle, ob das technische System 1 real als Hardware vorhanden ist oder durch ein Modell simuliert wird. Falls ein Modell für das technische System 1 verwendet wird, dann kann das Modell auch in der Kalibriereinheit 3 implementiert sein. Die Berechnung der Datenhülle D, wie nachfolgend ausgeführt, kann ebenfalls in der Kalibriereinheit 3 erfolgen.

Die in der Kalibrierung ermittelten Steuervariablen u, die die Ausgangsgröße optimieren, können dann in einer Steuereinheit 2, mit der das technische System 1 gesteuert wird, hinterlegt werden (wie in Fig.4 angedeutet) oder das technische System 1 damit eingestellt werden.

Erfindungsgemäß wird für die Berechnung der Datenhülle D der gesamte Kalibrationsraum K mit Dimension d zuerst aufgeteilt in einen ersten Unter-Kalibrationsraum $K_{sub}$ und eine Anzahl von weiteren Unter-Kalibrationsräumen $K_{sub2}$. Die Unter-Kalibrationsräume $K_{sub}$, $K_{sub2}$ sollen sich dabei vorzugsweise natürlich nicht überschneiden. Die Dimension d ist die Anzahl der Steuervariablen $u = [u_1, ..., u_k]$ und Zustandsvariablen $v = [v_1, ..., v_m]$, die in der Kalibrierung verwendet werden, also $d = k + m$. Falls auch äußere Einflüsse berücksichtigt werden, dann erhöht sich die Dimension d entsprechend. Zur Vereinfachung wird im Folgenden nur mehr von Kalibrationsvariablen $kv_1, ..., kv_d$ gesprochen, die die für die Kalibrierung verwendeten Steuervariablen und Zustandsvariablen, und gegebenenfalls äußere Einflüsse, umfassen. Erfindungsgemäß wird zuerst die maximale Dimension $d_{sub}$ des ersten Unter-Kalibrationsraumes $K_{sub}$ festgelegt oder vorgegeben, mit $d_{sub} < d$. Die maximale Dimension $d_{sub}$ ist dabei natürlich so gewählt, dass mit dem gewählten Hüllenalgorithmus ausreichend schnell eine Datenhülle $D_{sub}$ für diesen ersten Unter-Kalibrationsraum $K_{sub}$ berechnet werden kann. Bei Verwendung des QuickHull Algorithmus oder eines anderen Algorithmus zur Berechnung einer konvexen Datenhülle wird die maximale Dimension $d_{sub}$ beispielsweise mit 4 bis 7 vorgegeben, wobei natürlich auch eine andere maximale Dimension $d_{sub}$ gewählt werden kann. Bei anderen Algorithmen kann die maximale Dimension $d_{sub}$ gegebenenfalls auch größer gewählt werden. Die weiteren Unter-Kalibrationsräume $K_{sub2}$ können dieselbe maximale Dimension $d_{sub2} = d_{sub}$ haben, können aber auch kleinere Dimension $d_{sub2}$ aufweisen, wobei die Dimensionen der einzelnen weiteren Unter-Kalibrationsräume $K_{sub2}$ (sofern mehrere vorhanden sind) nicht gleich sein müssen. Um die ursprüngliche Dimension d des Kalibrationsraumes K der Kalibrierung auf mehrere kleinere Unter-Kalibrationsräume $K_{sub}$, $K_{sub2}$ zu verteilen, müssen natürlich bestimmte Kalibrationsvariablen kv des Kalibrationsraumes K der Kalibrierung ausgewählt und den Unter-Kalibrationsräumen $K_{sub}$, $K_{sub2}$ zugeordnet werden.

Dazu werden für die Anzahl d der Kalibrationsvariablen $kv_1, ..., Kv_d$ des Kalibrationsraumes K durch kombinatorische Variationen Teilmengen mit jeweils einer Anzahl e Elementen gebildet, also Teilmengen der Kalibrationsvariablen $kv_1, ..., Kv_d$ der Größe e. Je weniger Elemente e die Teilmengen haben, umso schneller lassen sich die Unter-Kalibrationsräume $K_{sub}$, $K_{sub2}$ ermitteln, weshalb kleine Mengen, insbesondere Mengen mit e = 2 Elementen, bevorzugt werden. Die Anzahl e der Elemente ist dabei natürlich kleiner als die Anzahl d der Kalibrationsvariablen $kv_1, ..., Kv_d$. Die kombinatorischen Variationen können dabei ohne Berücksichtigung der Reihenfolge der Elemente in den Teilmengen (also z.B. {a, b} = {b, a}) oder mit Berücksichtigung der Reihenfolge der Elemente in den Teilmengen (also z.B. {a, b} ‡ {b, a}) gebildet werden. Werden aus einer Menge mit d Elementen alle derartigen Variationen für eine Auswahl von e Elementen gebildet erhält man entweder

$$\binom{d}{e} = \frac{d!}{(d-e)!}$$ Variatio-nen mit Berücksichtigung der

Reihenfolge oder $$\binom{d}{e} = \frac{d!}{(d-e)!e!}$$ Variationen ohne Berücksichtigung der Reihenfolge. Für den gesamten Kalibrationsraum K mit der Dimension d ergeben sich daher eine Anzahl e-dimensionaler Zusammenhänge, in denen jeweils die Anzahl e der Kalibrationsvariablen $kv_1, ..., kv_d$ enthalten sind. Die Anzahl der e-dimensionalen Zusammenhänge entspricht der Anzahl der möglichen kombinatorischen Variationen. Im Falle e = 2, oder e = 3, kann man diese Zusammenhänge auch in Form von zweidimensionalen, oder dreidimensionalen, Diagrammen Bv darstellen. In diesen zweidimensionalen, oder dreidimensionalen, Diagrammen Bv sind die bekannten Datenpunkte $x_n$, die für die Ermittlung der Datenhüllen verwendet werden, aufgetragen.

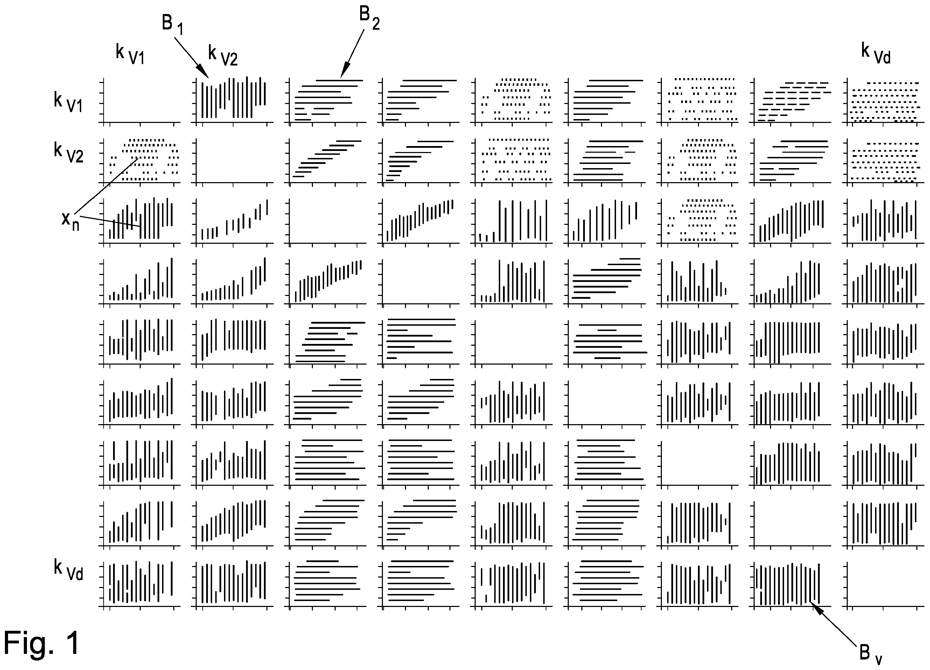

Im Ausführungsbeispiel nach Fig.1 wird von einem Kalibrationsraum K mit Dimension d=9 ausgegangen, d.h. dass der Kalibrationsraum K z.B. insgesamt neun Steuervariablen und Zustandsvariablen beinhaltet. Im Beispiel nach Fig.1 beispielsweise m = 2 Zustandsvariablen $v_1$ (=$kv_1$), $v_2$ (=$kv_2$) des technischen Systems, hier z.B. eine Motordrehzahl und ein Motordrehmoment. Zusätzlich gibt es noch k = 7 Steuervariablen $u_1$ (=$kv_3$), ..., $u_7$ (=$kv_d$) des technischen Systems, wobei es nicht wichtig ist, welche Variablen das konkret sind. Daraus werden Teilmengen mit jeweils e = 2 Elementen gebildet, woraus sich V = 72 Variationen (bei Berücksichtigung der Reihenfolge) der Kalibrationsvariablen $kv_1, ..., kv_d$ und V = 72 zweidimensionale Diagramme als Zusammenhänge Bv ergeben. Diese Variationen sind in Fig.1 zur Veranschaulichung matrixförmig dargestellt. Würde man die Reihenfolge nicht berücksichtigen, dann würde man V = 36 Variationen erhalten, was entweder in Form der oberen oder unteren Dreiecksmatrix in Fig.1 dargestellt werden könnte.

Die Achsen der einzelnen zweidimensionalen Zusammenhänge Bv werden vorzugsweise normalisiert, d.h. dass die Abszissenwerte der einzelnen zweidimensionalen Zusammenhänge Bv auf gleichen Achsenlängen gebracht werden. Dasselbe passiert vorzugsweise mit den Ordinatenwerten, wobei die Achsenlängen der Abszissen und Ordinaten nicht gleich sein müssen. Der Schritt des Normalisierens ist nicht unbedingt erforderlich, aber vorteilhaft, weil das in der Regel zu besseren Ergebnissen führt. Es entstehen damit für die zweidimensionalen Zusammenhänge Bv rechteckige Raster mit gleichen Seitenlängen (den Achsenlängen der Abszissen und Ordinaten), wie in Fig.1 dargestellt. Dieser Schritt kann natürlich auch für höherdimensionale Zusammenhänge Bv durchgeführt werden.

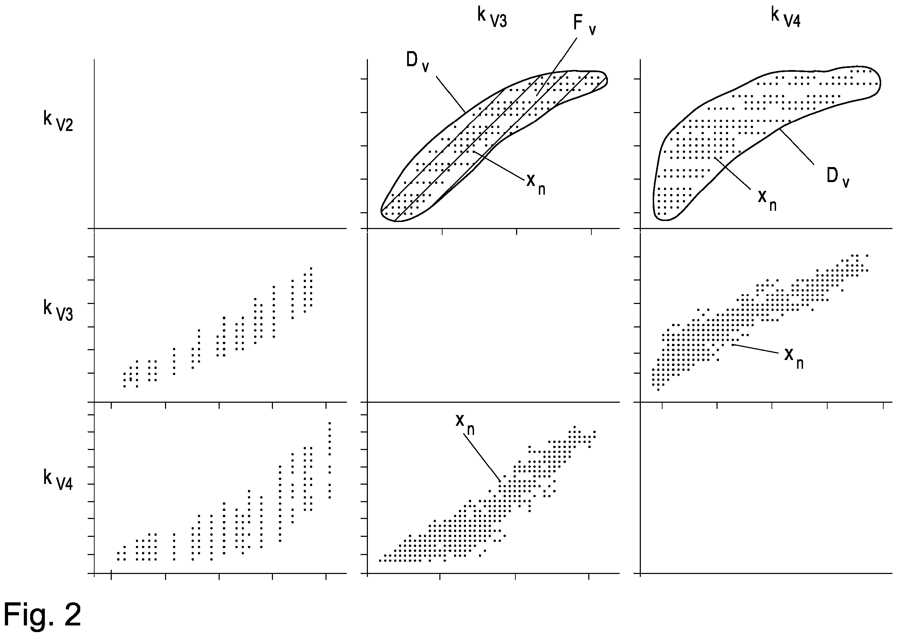

Nun wird für jeden zweidimensionalen Zusammenhang Bv, oder allgemein für jeden e-dimensionalen Zusammenhang, eine Datenhülle Dv berechnet, beispielsweise eine konvexe Datenhülle $D_v$, beispielsweise mit dem QuickHull Algorithmus. Nachdem die Dimension der Zusammenhänge Bv vorzugsweise zwei ist, oder allgemein ausreichend klein gewählt wird, können solche Datenhüllen Dv sehr schnell berechnet werden. Die Datenhüllen Dv sind in Fig.2 für einige Diagramme dargestellt.

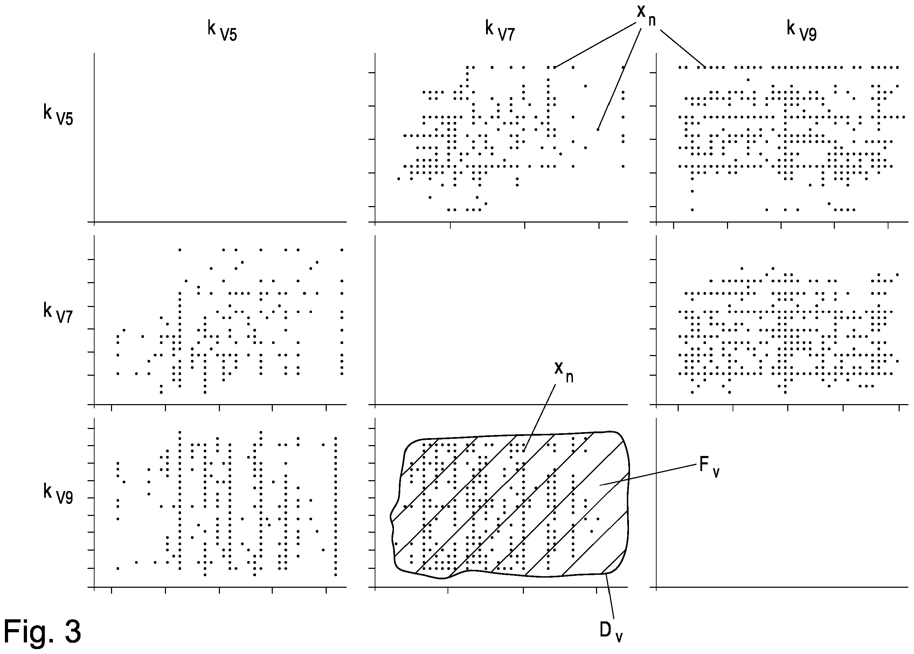

Als nächstes werden die Volumeninhalte $F_v$ der berechneten Datenhüllen $D_v$ ermittelt. Im Fall zweidimensionaler Datenhüllen $D_v$ reduzieren sich die Volumen natürlich auf Flächeninhalte. Solchen Volumeninhalte Fv können mit den bekannten Datenhüllen Dv sehr einfach numerisch ermittelt werden. In Fig.2 und 3 sind zur Veranschaulichung jeweils einige zweidimensionale Diagramme $B_v$ für bestimmte Kalibrationsvariablen kv, sowie die zugehörigen Datenhüllen Dv und die Volumeninhalte Fv (hier Flächeninhalte) dargestellt. Je kleiner der Volumeninhalt Fv einer solchen e-dimensionalen Datenhülle Dv, umso stärker begrenzen die im e-dimensionalen Zusammenhang Bv enthaltenen Kalibrationsvariablen kv die Datenhülle D des zugrundeliegenden Kalibrationsraumes K. Äquivalent dazu könnte natürlich der Volumeninhalt außerhalb der Datenhülle Dv berechnet werden. Dann würde gelten, dass der begrenzende Einfluss auf die Datenhülle des zugrundeliegenden Versuchsraumes umso größer ist, umso größer dieses Volumen ist. In gleicher Weise könnte für die Beurteilung das Verhältnis oder die Differenz des Volumens außerhalb der Datenhülle $D_v$ zum Volumeninhalt Fv der Datenhülle Dv (oder umgekehrt) herangezogen werden. Ebenso könnte ein Verhältnis des Volumeninhalts Fv einer Datenhülle, oder das Volumen außerhalb der Datenhülle Dv mit dem Volumen des im Zusammenhang $B_v$ aufgespannten e-dimensionalen Raumes in Verhältnis gesetzt werden. Das läuft aber alles auf die Bewertung des Volumeninhaltes Fv der Datenhüllen Dv hinaus, und die begrenzende Wirkung der an einem e-dimensionalen Diagramm Bv beteiligten Kalibrationsvariablen kv wird umso höher bewertet, je kleiner dieser Volumeninhalt Fv ist.

Es werden demnach für den ersten Unter-Kalibrationsraum $K_{sub}$ diejenigen $d_{sub}$ Kalibrationsvariablen kv ausgewählt, die an den Datenhüllen Dv in den e-dimensionalen Zusammenhängen Bv mit den kleinsten Volumeninhalten Fv beteiligt sind.

Dazu kann beispielsweise der e-dimensionale Zusammenhang $B_v$ mit dem kleinsten Volumeninhalt Fv ausgewählt werden und die beteiligten Kalibrationsvariablen kv zu den $d_{sub}$ Kalibrationsvariablen kv hinzugefügt werden. Danach wird der Zusammenhang Bv mit dem zweitkleinsten Volumeninhalt Fv ausgewählt und die beiden beteiligten Kalibrationsvariablen kv werden wieder zu den $d_{sub}$ Kalibrationsvariablen kv hinzugefügt. Ist eine der beteiligten Kalibrationsvariablen kv schon in der Menge der ausgewählten Kalibrationsvariablen kv enthalten, dann wird diese natürlich nicht nochmals hinzugefügt. Das wird solange wiederholt, bis alle $d_{sub}$ Kalibrationsvariablen kv ausgewählt wurden. Diese Auswahl legt somit nur fest, welche der d Kalibrationsvariablen kv des Kalibrationsraumes K im ersten Unter-Kalibrationsraum $K_{sub}$ mit der Dimension $d_{sub}$ verwendet werden.

Können in einem letzten Schritt nicht alle an einem Zusammenhang Bv beteiligten Kalibrationsvariablen kv hinzugefügt werden, weil nur mehr eine kleinere Anzahl von auszuwählenden Kalibrationsvariablen kv fehlt, dann kann beispielsweise einfach die benötigte Anzahl der beteiligten Kalibrationsvariablen kv beliebig ausgewählt werden. Beispielsweise im zweidimensionalen Fall immer die Kalibrationsvariablen kv der Abszisse oder der Ordinate. Es könnte aber dieser Zusammenhang Bv auch übersprungen werden und der Zusammenhang Bv mit der nächstgrößten Datenhülle Dv ausgewählt werden, solange ein Zusammenhang Bv gefunden wird, an dem nur mehr die benötigte Anzahl von Kalibrationsvariablen kv beteiligt ist, die noch nicht in der Menge der $d_{sub}$ ausgewählten Kalibrationsvariablen kv enthalten ist. Es kann aber auch jegliche andere Strategie zur Auswahl der fehlenden Kalibrationsvariablen kv implementiert werden.

Für den damit festgelegten Unter-Kalibrationsraum mit Dimension $d_{sub} < d$ kann dann mit den bekannten Datenpunkten $\mathbf{x}_n$, die natürlich auf die $d_{sub}$ ausgewählten Kalibrationsvariablen kv reduziert sind, eine beliebige Datenhülle $D_{sub}$ berechnet werden. Nachdem die Dimension $d_{sub}$ ausreichend nieder ist, kann das auch mit herkömmlichen Hüllenalgorithmen, wie dem Quick-Hull Algorithmus, ausreichend schnell erfolgen.

Für die restlichen $(d - d_{sub})$ Kalibrationsvariablen kv des Kalibrationsraumes K, die auf die weiteren Unter-Kalibrationsräume $K_{sub2}$ aufgeteilt werden müssen, kann verschieden vorgegangen werden.

Eine Möglichkeit ist, aus den verbleibenden $(d - d_{sub})$ Kalibrationsvariablen kv wieder $d_{sub2}$ Kalibrationsvariablen kv, wobei die Dimension $d_{sub2}$ wieder festgelegt oder vorgegeben sein kann, mit der obigen Methode auszuwählen, um einen Unter-Kalibrationsraum $K_{sub2}$ zu bestimmen. Das kann natürlich auch für mehrere weitere Unter-Kalibrationsräume $K_{sub2}$ gemacht werden. Damit können ebenso entsprechende Datenhüllen $D_{sub2}$ für diese Unter-Kalibrationsräume berechnet werden. Ebenso könnten für die verbleibenden (d - $d_{sub}$) Kalibrationsvariablen kv auch einfach die schon ermittelten Datenhüllen Dv der e-dimensionalen Diagramme Bv verwendet werden, was eine besonders schnelle Methode darstellt. Eine weitere Möglichkeit besteht darin, die verbleibenden (d - $d_{sub}$) Kalibrationsvariablen kv einfach manuell auf weitere Unter-Kalibrationsräume $K_{sub2}$ aufzuteilen, weil die Kalibrationsvariablen kv mit der beschränkensten Wirkung ohnehin schon im ersten Unter-Kalibrationsraum $K_{sub}$ enthalten sind. Auch eine Kombination dieser Möglichkeiten ist denkbar.

Für die verbleibenden (d - $d_{sub}$) Kalibrationsvariablen kv könnte aber bei der Kalibrierung auch wie in der WO 2017/198638 A1 beschrieben verfahren werden. Auch das kann natürlich mit den anderen Möglichkeiten kombiniert werden.

Für die Erfindung vorteilhaft ist die Zuordnung der $d_{sub}$ Kalibrationsvariablen kv mit der beschränkensten Wirkung zum ersten Unter-Kalibrationsraum $K_{sub}$, die mit dem erfindungsgemäßen Verfahren systematisch und automatisiert erfolgen kann.

Für die Kalibrierung sind in den Nebenbedingungen g damit anstelle einer einzigen Datenhülle D mit hoher Dimension d mehrere Datenhüllen $D_{sub}$, $D_{sub2}$, $D_v$ kleinerer Dimension zu prüfen, was aber an der grundsätzlichen Vorgehensweise der Kalibrierung nichts ändert.

## Patentansprüche

1. Verfahren zur Kalibrierung eines technischen Systems, insbesondere eines Verbrennungsmotors, eines Getriebes, eines Hybridantriebs, einer Klimatisierung eines Fahrzeugs, einer elektronisch steuerbaren Federung, einer elektronisch steuerbaren Aufhängung oder einer Fahrzeuglenkung, das durch eine Anzahl k von Steuervariablen ($u_k$) des technischen Systems gesteuert wird und sich in Abhängigkeit der Steuervariablen ($u_k$) des technischen Systems ein Betriebspunkt in Form einer Anzahl m von Zustandsvariablen ($v_m$) des technischen Systems einstellt, wobei bei der Kalibrierung in einem Betriebspunkt durch eine Optimierung unter Einhaltung vorgegebener Nebenbedingungen (h, g) die Steuervariablen ($u_k$) des technischen Systems ermittelt werden, die hinsichtlich zumindest einer Ausgangsgröße (y) des technischen Systems optimal sind, wobei mit einer Nebenbedingung (g) der Optimierung geprüft wird, ob bei der Optimierung berechnete neue Steuervariablen (u) des technischen Systems innerhalb einer Datenhülle D um eine Anzahl vorhandener Datenpunkte ($x_n$) des technischen Systems liegt, **dadurch gekennzeichnet, dass** ein d-dimensionaler Kalibrationsraum K, der die für die Kalibrierung benötigten Kalibrationsvariablen kv in Form von benötigten Steuervariablen des technischen Systems und benötigten Zustandsvariablen des technischen Systems umfasst, auf einen ersten Unter-Kalibrationsraum $K_{sub}$ mit einer Dimension $d_{sub} < d$ und zumindest einen weiteren Unter-Kalibrationsraum $K_{sub2}$ aufgeteilt wird, indem

- durch kombinatorische Variationen Teilmengen mit jeweils einer Anzahl e, vorzugsweise e = 2, von Kalibrationsvariablen kv ermittelt werden und aus den sich ergebenden e-dimensionalen Zusammenhängen Bv von Kalibrationsvariablen kv und anhand der vorhandenen Datenpunkte ($x_n$) des technischen Systems für jeden e-dimensionalen Zusammenhang Bv eine e-dimensionale Datenhülle Dv berechnet wird,
- für jede e-dimensionale Datenhülle Dv der Volumeninhalt Fv der Datenhülle Dv geprüft wird,
- die $d_{sub}$ Kalibrationsvariablen $k_v$, die den e-dimensionalen Datenhüllen $D_v$ mit den kleinsten Volumeninhalten Fv zugeordnet sind, für den ersten Unter-Kalibrationsraum $K_{sub}$ ausgewählt werden,
- die verbleibenden d - $d_{sub}$ Kalibrationsvariablen $k_v$ dem zumindest einen weiteren Unter-Kalibrationsraum $K_{sub2}$ zugewiesen werden oder auf mehrere weitere Unter-Kalibrationsräume $K_{sub2}$ aufgeteilt werden, und
- mit den vorhandenen Datenpunkten ($x_n$) des technischen Systems zumindest für den ersten Unter-Kalibrationsraum $K_{sub}$ eine $d_{sub}$-dimensionale Datenhülle $D_{sub}$ berechnet wird, die bei der Kalibrierung als Nebenbedingung g geprüft wird.

2. Verfahren nach Anspruch 1, **dadurch gekennzeichnet, dass** zumindest ein verbleibender e-dimensionaler Zusammenhang Bv mit nicht für den ersten Unter-Kalibrationsraum $K_{sub}$ ausgewählten Kalibrationsvariablen kv als weiterer Unter-Kalibrationsraum $K_{sub2}$ verwendet wird und die e-dimensionale Datenhülle Dv dieses e-dimensionalen Zusammenhanges Bv bei der Kalibrierung als Nebenbedingung g geprüft wird.

3. Verfahren nach Anspruch 1, **dadurch gekennzeichnet, dass** alle verbleibenden e-dimensionale Zusammenhänge Bv mit nicht für den ersten Unter-Kalibrationsraum $K_{sub}$ ausgewählten Kalibrationsvariablen kv als weitere Unter-Kalibrationsräume $K_{sub2}$ verwendet werden und die e-dimensionalen Datenhüllen Dv dieser e-dimensionalen Zusammenhänge Bv bei der Kalibrierung als Nebenbedingung g geprüft werden.

4. Verfahren nach einem der Ansprüche 1 bis 3, **dadurch gekennzeichnet, dass** bei der Kalibrierung zumindest ein äußerer Einfluss auf das technische System berücksichtigt wird und die Kalibrationsvariablen kv den zumindest einen äußeren Einfluss umfassen.

## Claims

1. Method for calibrating a technical system, particularly an internal combustion engine, a transmission, a hybrid drive, an air conditioning of a vehicle, an electronically controllable suspension, or a vehicle steering system, which is controlled by a number k of control variables ($u_k$) of the technical system and, in dependence of the control variables ($u_k$) of the technical system, an operating point results in the form of a number m of state variables ($v_m$) of the technical system, wherein, during the calibration, the control variables ($u_k$) of the technical system are determined in an operating point by optimization while observing specified auxiliary conditions (h, g), said control variables ($u_k$) being optimal with regard to at least one output variable (y) of the technical system, wherein it is checked with an auxiliary condition (g) of the optimization whether new control variables (u) of the technical system calculated during the optimization lie within a data envelope D around a number of existing data points ($x_n$) of the technical system, **characterized in that** a d-dimensional calibration space K, which comprises the calibration variables $k_v$ required for the calibration in the form of required control variables of the technical system and required state variables of the technical system, is divided into a first sub-calibration space $K_{sub}$ with a dimension $d_{sub} < d$ and at least one further sub-calibration space $K_{sub2}$, **in that**

 - subsets with a number e, preferably e = 2, of calibration variables $k_v$ are determined through combinatorial variations and from the resulting e-dimensional relationships $B_v$ of calibration variables $k_v$ and by means of the existing data points ($x_n$) of the technical system, an e-dimensional data envelope $D_v$ is calculated for each e-dimensional relationship $B_v$,
 - the volume content $F_v$ of the data envelope $D_v$ is checked for each e-dimensional data envelope $D_v$,
 - the $d_{sub}$ calibration variables $k_v$, which are assigned to the e-dimensional data envelopes $D_v$ with the smallest volume contents $F_v$, are selected for the first sub-calibration space $K_{sub}$,
 - the remaining d - $d_{sub}$ calibration variables $k_v$ are assigned to the at least one further sub-calibration space $K_{sub2}$ or are divided into several further sub-calibration spaces $K_{sub2}$, and
 - a $d_{sub}$-dimensional data envelope $D_{sub}$ is calculated using the available data points ($x_n$) of the technical system at least for the first sub-calibration space $K_{sub}$ and is checked during the calibration as an auxiliary condition g.

2. Method according to claim 1, **characterized in that** at least one remaining e-dimensional relationship $B_v$ with calibration variables $k_v$ not selected for the first sub-calibration space $K_{sub}$ is used as a further sub-calibration space $K_{sub2}$ and the e-dimensional data envelope $D_v$ of said e-dimensional relationship $B_v$ is additionally checked as an auxiliary condition g during calibration.

3. Method according to claim 1, **characterized in that** all remaining e-dimensional relationships $B_v$ with calibration variables $k_v$ not selected for the first sub-calibration space $K_{sub}$ are used as further sub-calibration spaces $K_{sub2}$ and the e-dimensional data envelopes $D_v$ of said e-dimensional relationships $B_v$ are checked as additional auxiliary conditions g during calibration.

4. Method according to any of claims 1 to 3, **characterized in that** at least one external influence on the technical system is taken into account during the calibration and the calibration variables kv comprise the at least one external influence.

## Revendications

1. Procédé permettant l'étalonnage d'un système technique, en particulier d'un moteur à combustion interne, d'une transmission, d'un entraînement hybride, d'une climatisation d'un véhicule, d'un ressort à commande électronique, d'une suspension à commande électronique ou d'une direction de véhicule, qui est commandé par un nombre k de variables de commande ($U_k$) du système technique et, en fonction des variables de commande ($U_k$) du système technique, un point de fonctionnement est réglé sous la forme d'un nombre m de variables d'état ($v_m$) du système technique, les variables de commande ($U_k$) du système technique étant déterminées pendant l'étalonnage en un point de fonctionnement par une optimisation conforme à des conditions secondaires (h, g) prédéfinies, lesquelles variables de commande sont optimales par rapport à au moins une grandeur de sortie (y) du système technique, une vérification intervenant grâce à une condition secondaire (g) de l'optimisation permettant de savoir si de nouvelles variables de commande (u) du système technique calculées pendant l'optimisation se trouvent dans une enveloppe de données D autour d'un nombre de points de données ($x_n$) existants du système technique, **caractérisé en ce qu'un** espace d'étalonnage K à d dimensions, lequel comprend les variables d'étalonnage $k_v$ requises pour l'étalonnage sous la forme de variables de commande requises du système technique et des variables d'état requises du système technique, est divisé en un premier sous-espace d'étalonnage $K_{sub}$ comportant une dimension $d_{sub} < d$ et en au moins un autre sous-espace d'étalonnage $K_{sub2}$,

- des sous-ensembles comportant respectivement un nombre e, de préférence e = 2, de variables d'étalonnage k étant déterminées à l'aide de variations combinatoires, et une enveloppe de donnée $D_v$ à e dimensions étant calculée à partir des relations $B_v$ à e dimensions résultantes de variables d'étalonnage $k_v$ et sur la base des points de données ($\mathbf{x}_n$) existants du système technique pour chaque relation $B_v$ à e dimensions,
- le contenu volumique $F_v$ de l'enveloppe de données $D_v$ étant vérifié pour chaque enveloppe de données $D_v$ à e dimensions
- les variables d'étalonnage $k_v$ $d_{sub}$ affectées aux enveloppes de données $D_v$ à e dimensions avec le plus petit contenu volumique $F_v$ étant sélectionnées pour le premier sous-espace d'étalonnage $K_{sub}$,
- les variables d'étalonnage $k_v$ $d-d_{sub}$ restantes étant attribuées à au moins un autre sous-espace d'étalonnage $K_{sub2}$ ou étant divisées en plusieurs autres sous-espaces d'étalonnage $K_{sub2}$, et
- une enveloppe de données $D_{sub}$ à $d_{sub}$ dimensions étant calculée avec les points de données ($\mathbf{x}_n$) existants du système technique, au moins pour le premier sous-espace d'étalonnage $K_{sub}$, laquelle enveloppe de données est vérifiée en tant que condition secondaire g pendant l'étalonnage.

2. Procédé selon la revendication 1, **caractérisé en ce qu'au** moins une relation $B_v$ à e dimensions restante est utilisée en tant qu'autre sous-espace d'étalonnage $K_{sub2}$ avec des variables d'étalonnage $k_v$ non sélectionnées pour le premier sous-espace d'étalonnage $K_{sub}$ et l'enveloppe de données $D_v$ à e dimensions de ladite relation $B_v$ à e dimensions est vérifiée en tant que condition secondaire g pendant l'étalonnage.

3. Procédé selon la revendication 1, **caractérisé en ce que** toutes les relations $B_v$ à e dimensions restantes sont utilisées en tant qu'autre sous-espace d'étalonnage $K_{sub2}$ avec des variables d'étalonnage $k_v$ non sélectionnées pour le premier sous-espace d'étalonnage $K_{sub}$ et les enveloppes de données $D_v$ à e dimensions desdites relations $B_v$ à e dimensions sont vérifiées en tant que condition secondaire g pendant l'étalonnage.

4. Procédé selon l'une des revendications 1 à 3, **caractérisé en ce qu'au** moins une influence externe sur le système technique est prise en compte pendant l'étalonnage et les variables d'étalonnage $k_v$ comprennent l'au moins une influence externe.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017198638 A1
- WO 2012169972 A1
- WO 2014187828 A1
- WO 2013087307 A2

**In der Beschreibung aufgeführte Nicht-Patentliteratur**

- **H. EDELSBRUNNER et al.** Three-Dimensional Alpha Shapes. *ACM Transactions on Graphics,* Januar 1994, vol. 13 (1), 43-72